# FASCICULE DE BREVET EUROPEEN

(11) **EP 1 704 077 B1**
(45) Date de publication et mention de la délivrance du brevet: **26.03.2008**
(21) Numéro de dépôt: 05717426.0
(22) Date de dépôt: 14.01.2005
(51) Int. Cl.: B62B 13/04

(54) **ENGIN DE GLISSE SUR NEIGE**
GLEITVORRICHTUNG FÜR SCHNEESPORTARTEN
GLIDING DEVICE FOR SNOW SPORTS

(30) Priorité: 15.01.2004 FR 0400374
(43) Date de publication de la demande: 27.09.2006
(73) Titulaire: Lasala Philippe Joseph (Affaire Personnelle), 67110 Uttenhoffen (FR)
(72) Inventeur: LASALA, Philippe, Joseph, F-67110 Uttenhoffen (FR)
(74) Mandataire: Littolff, Denis
(86) Numéro de dépôt international: PCT/FR2005/000094
(87) Numéro de publication internationale: WO 2005/073050

(56) Documents cités:
- WO-A-00/13956
- WO-A-01/85526
- WO-A-03/018382
- GB-A- 2 171 063

## Description

La présente invention concerne un engin de glisse sur neige dont l'apparence est similaire à celle d'une trottinette dont les roues sont cependant remplacées par des patins ou par des planches apparentées aux technologies du ski, et qui comporte par conséquent un patin arrière porteur et un patin avant directionnel auquel est reliée une colonne de direction.

Cette dernière pivote dans un manchon solidarisé à l'extrémité supérieure d'un cadre rigide reliant entre eux lesdits patins. L'extrémité inférieure du cadre est fixée à un socle support surmontant le patin porteur, et qui est prévu pour supporter les pieds de l'utilisateur. Ce dernier se tient donc debout sur ce support, les mains tenant un guidon surmontant la colonne de direction et au moyen duquel il pilote l'engin.

Les configurations du terrain varient d'une piste à l'autre, et les bosses, les modifications des pentes, les passages d'une déclivité négative à une déclivité positive, etc. font partie intégrante des tracés usuels rencontrés lors des descentes effectuées à l'aide de l'engin de l'invention, et doivent susciter de sa part une possibilité de conduite confortable et souple.

Cette possibilité résulte notamment de l'existence de suspensions et d'amortisseurs, dont la relation avec les patins et le cadre doit être judicieusement prévue par exemple en terme de positionnement. La conception même du cadre doit également prendre en compte la nécessaire adaptabilité aux variations de terrain proprement dites, aux types de neige (poudreuse, mouillée, glacée) ainsi qu'à des conduites sportives aussi bien que tranquilles.

Les engins de l'art antérieur présentent déjà, pour certains, des dispositifs amortisseurs au niveau de la fourche. Il en va par exemple ainsi pour l'engin glissant décrit dans le brevet français FR 2 659 864, dans lequel un amortisseur pneumatique relie la base de la fourche à l'avant du patin directionnel.

L'engin décrit dans le brevet français FR 2 831 127 comporte quant à lui deux dispositifs amortisseurs, dont l'un est également disposé au niveau de la fourche avant mais ne relie pas la base de celle-ci au patin, du fait de la configuration spécifique donnée à cette fourche, qui n'est pas dans l'axe de la colonne de direction. Un dispositif trapézoïdal permet en effet de décaler la fourche, dont la base est en contact avec le patin directionnel, de la colonne de direction proprement dite, qui se développe suivant un axe parallèle. Dans ce cas, le dispositif amortisseur relie la base de la colonne de direction à une traverse localisée entre les deux branches de la fourche.

L'engin décrit dans ce document comporte également un deuxième dispositif amortisseur, qui relie une barre de stabilisation inclinée du cadre rigide au patin porteur. Cette structure est plus performante que celle qui fait l'objet du brevet précédemment cité, car l'existence du dispositif amortisseur qui relie le cadre rigide au patin arrière procure à l'utilisateur un confort plus élevé et confère à l'engin une souplesse d'utilisation bien meilleure, car il n'y a plus de liaison rigide entre ledit cadre et l'arrière du patin porteur.

La plaque sur laquelle prennent place les pieds de l'utilisateur est, dans cette configuration, dissociée du patin arrière support, et les liaisons qu'elles constituent autorisent un mouvement relatif complexe organisé selon plusieurs axes de rotation transversale, permettant à la plaque support de se rapprocher ou de s'écarter du patin.

Une telle possibilité n'existe pas dans le document WO 01 /85526, dans lequel le cadre rigide est directement monté sur le patin porteur arrière, auquel il est fixé rigidement. De même, la fourche de la colonne de direction est directement fixée au patin directionnel. Seule la barre de stabilisation inclinée du cadre rigide est interrompue par un dispositif élastique absorbeur de chocs, qui fonctionne en association avec une semelle support séparée en deux tronçons de longueur approximativement égale.

Les structures de l'art antérieur précitées ne sont cependant pas pleinement satisfaisantes en ce sens qu'elles ne transmettent pas de manière optimale les informations, par exemple le positionnement entre le patin directionnel et le patin porteur arrière.

Pour ce type d'engins, l'équation à résoudre est de toute évidence délicate, les solutions consistant à trouver un compromis entre la nécessaire rigidité du cadre et l'exigence d'adaptation quasi instantanée de la position d'un des patins à la position de l'autre, pour que l'engin soit manipulable, et de préférence souple à conduire quelles que soient les conditions qu'il rencontre.

Ainsi, s'il est vrai que la fourche disposée à l'extrémité inférieure de la colonne de direction doit amortir les chocs, vibrations, etc. dans l'axe de ladite colonne de direction, il convient de plus que la conception puisse assurer une interaction entre les mouvements horizontaux de la colonne de direction et le positionnement du patin porteur. En fait, pour fonctionner optimalement, il faudrait que ce dernier suive les mouvements du patin directionnel en les reproduisant juste après lui. C'est l'objectif qui est assigné à l'invention.

A cet effet, l'engin de glisse selon l'invention, comportant un patin arrière porteur et un patin avant directionnel auquel est reliée une colonne de direction pivotant dans un manchon solidarisé à l'extrémité supérieure d'un cadre rigide reliant lesdits patins, et dont l'extrémité inférieure est fixée à un socle support surmontant le patin porteur et prévu pour supporter les pieds de l'utilisateur, se caractérise à titre principal en ce que la partie avant dudit socle est relié au patin porteur par une liaison mécanique à débattement d'allure perpendiculaire audit patin contrôlé par un dispositif amortisseur.

Cette possibilité augmente la souplesse de conduite en répercutant notamment les accidents du terrain de façon plus moelleuse, et en permettant au patin porteur de suivre optimalement la trajectoire du patin directionnel.

De préférence ledit socle est articulé au patin porteur en un emplacement situé dans la moitié arrière du socle, ladite articulation étant orientée transversalement au patin.

Le débattement avant a en effet une répercussion sur la totalité du socle. Prévoir une telle articulation revient à diminuer les contraintes sur lui et sur sa liaison au patin, qui doivent autrement être prises en compte par la flexibilité l'élasticité des matériaux.

Selon une possibilité, le socle peut comporter une articulation transversale localisée sensiblement en son milieu, divisant ledit socle en une partie avant et une partie arrière articulées l'une à l'autre.

Cette articulation médiane améliore encore la souplesse de conduite de l'engin, comme cela sera décrit plus en détail dans la suite.

L'existence combinée des liaisons mécaniques socle/patin précitées et de la division du socle support en deux parties permet notamment la réalisation de déplacements complexes du socle supportant les pieds de l'utilisateur, en fonction d'une part des contraintes impulsées par l'utilisateur et retransmises par le guidon, d'autre part des efforts exercés individuellement par les pieds de l'utilisateur, soit sur la partie arrière du socle, soit sur sa partie avant, et enfin des réactions provoquées par le terrain ou la qualité de la neige.

De préférence, selon l'invention, le cadre rigide est fixé à la partie avant du socle. Les mouvements du guidon, notamment dans un plan d'allure horizontale, sont donc répercutés via le cadre rigide à ladite partie avant du socle. Celle-ci comporte deux liaisons distinctes, l'une avec le patin porteur, et l'autre avec la partie arrière du socle. Il n'y a pas de rigidité dans ces deux liaisons, et les efforts provenant des accidents du terrain ne sont donc transmis que partiellement au socle, ce qui diminue l'intensité des chocs répercutés par le patin porteur au socle, et par conséquent aux jambes de l'utilisateur.

Selon une possibilité, ladite extrémité avant du socle est articulée au patin porteur au moyen d'une genouillère dont les axes de rotation sont transversaux, ladite genouillère étant disposée à l'extrémité avant du socle. Cette partie du socle peut donc se déplacer non seulement verticalement, mais également vers l'avant ou vers l'arrière, selon sa position verticale.

Le dispositif amortisseur est de préférence disposé entre le cadre rigide et le patin porteur, au voisinage de la genouillère, ledit dispositif amortisseur étant articulé à ses deux extrémités selon un axe de pivotement parallèle aux axes de la genouillère. Cet amortisseur, dont la dureté est réglable, joue un rôle dans la transformation des mouvements de la fourche / colonne de direction, et donc des contraintes qui y sont exercées, en des contraintes qui sont finalement exercées sur le patin porteur via le socle, en vue de l'orienter en réponse à la position de l'ensemble constitué de la colonne de direction et du patin directionnel.

Lorsque le mouvement de la fourche se produit vers le haut, le plan du patin directionnel est en principe plus haut que le plan du patin porteur, ce qui peut entraîner un blocage dans la neige de la pointe du patin porteur en l'absence du système de l'invention. Inversement, quand le mouvement de la fourche se fait vers le bas, du fait du travail du dispositif amortisseur axial qui y est intégré, le plan horizontal du patin directionnel pourrait être plus bas que celui du patin porteur, qui ne serait plus en contact avec le sol à certains moments, et rendrait la conduite de l'engin hasardeuse.

Selon une possibilité, ladite genouillère comporte un double jeu de biellettes parallèles, le dispositif amortisseur étant disposé entre lesdits jeux.

Dans cette structure mécanique, le doublement de la genouillère permet de répartir les contraintes transmises entre le cadre rigide et le patin porteur en deux trajets symétriques par rapport à l'axe longitudinal de l'engin. Par ailleurs, compte tenu du centrage du dispositif amortisseur par rapport au dit axe longitudinal, ce doublement s'impose.

De préférence, l'articulation reliant la partie arrière du socle et le patin porteur est localisée à proximité de l'articulation reliant les parties avant et arrière dudit socle. Selon l'invention, un dispositif d'amortissement est de plus placé entre le cadre rigide et la partie arrière du socle, ledit dispositif étant articulé à ses deux extrémités selon un axe de pivotement transversal.

Compte tenu de ces attaches, et en fonction de la dureté avec laquelle il est réglé, ce dispositif amortisseur transmet également avec souplesse une partie des informations en provenance du guidon à la partie arrière du socle, laquelle la retransmet aux pieds de l'utilisateur. Cette structure permet un maniement optimal de l'engin de glisse, car il y a une transmission des informations entre les mains et les pieds de l'utilisateur, chacun pouvant en retour affiner la commande/le déplacement impulsé par l'autre.

A l'avant, la colonne de direction est fixée au patin avant directionnel par l'intermédiaire d'une fourche dont chaque branche comporte une suspension déformable élastiquement dans la direction de l'axe de la colonne, dont la dureté est réglable.

La combinaison des systèmes d'amortissement/suspension, et plus particulièrement de la fourche avant et de l'amortisseur de la liaison à genouillère, permettent une évolution optimale de l'engin lorsque le terrain est accidenté, en préservant au surplus des conditions de confort pour l'utilisateur. Cela résulte notamment du fait que les vibrations dues à la nature du terrain sont moins ressenties dans le guidon grâce à ladite fourche.

L'existence de ces dispositifs amortisseurs, associés à la souplesse des patins, permet également une évolution plus coulée dans les virages, grâce au cadre qui est en fait séparé en deux, en son socle, par l'axe transversal horizontal. Cette séparation permet d'assouplir le cadre rigide, les amortisseurs qui ont été ajoutés permettant son retour à une position initiale tout en absorbant les sollicitations dues à l'utilisateur, qui sont notamment dues à son poids. Il est d'ailleurs à noter que la dureté des systèmes d'amortissement peut être réglée, en fonction du poids de l'utilisateur, ce qui permet aux deux parties du socle de se maintenir parallèles aux patins porteurs, au moins en position de charge normale (avec le poids de l'utilisateur), et de ne bouger que lorsque l'utilisateur exerce des surpressions sur l'articulation médiane de séparation. En l'absence de charge, la partie avant du socle est légèrement surélevée, et la partie arrière est inclinée de telle sorte que son extrémité arrière se trouve proche du patin porteur.

Selon une caractéristique importante de l'invention, la colonne de direction est également reliée au patin directeur par l'intermédiaire d'un dispositif amortisseur doublement articulé à ladite colonne et au patin selon un axe de pivotement transversal, et dont l'orientation et le point d'application à l'arrière du patin permettent au dispositif amortisseur d'exercer un effort de poussée sur l'arrière aboutissant à incliner le plan dudit patin et à déplacer corrélativement sa pointe avant vers le haut.

Cet amortisseur a pour fonction de maintenir au repos le plan du patin directionnel incliné avec sa pointe avant surélevée, car il est réglé pour pousser vers le bas et en permanence sur l'arrière du patin directeur. En fonctionnement par exemple en neige poudreuse, l'existence de cet amortisseur permet de ne pas planter l'avant du patin directeur dans la neige molle ou profonde, et de surfer sur la neige en ayant une position plus naturelle.

Dans les dispositifs de l'art antérieur, le maintien de la pointe avant du patin directeur relevé obligeait l'utilisateur à se tenir sur l'arrière de l'engin, et de maintenir son poids sur cette zone arrière afin de rehausser la partie avant, ce qui n'était guère confortable.

Le confort est donc largement amélioré, d'autant que, grâce à la souplesse du cadre telle qu'expliquée auparavant, le patin porteur lui-même tend à incliner son plan de sorte que sa pointe avant soit dirigée vers le haut, ce qui améliore évidemment la flottaison de l'ensemble.

De préférence, ce dispositif amortisseur est fixé à un emplacement de la colonne de direction qui est fixe axialement. En d'autres termes, il se situe dans la partie basse de la colonne qui ne subit pas les déplacements axiaux dus aux suspensions.

D'une manière générale, la séparation du socle en deux, combinée aux différents systèmes d'amortissement envisagés ci-dessus, permet en réalité un mouvement de pliage du cadre qui libère au moins une partie du patin porteur, en l'occurrence sa portion avant, désormais plus apte à s'adapter aux configurations du terrain sans que sa liberté de déplacement ne soit obérée par le poids de l'utilisateur.

Lorsque le patin avant aborde une bosse, le patin porteur ne reste plus dans son plan, mais maintient en permanence un contact avec le sol.

Ces possibilités améliorent de plus la prise de carre, qui est favorisée en premier lieu par la souplesse des patins, mais bénéficie également de la séparation du socle en deux parties.

En effet, pour tourner, l'utilisateur se positionne sur une carre latérale, le patin se courbe et décrit un arc de cercle qui définit la trajectoire. Plus l'arc de cercle est accentué, plus le guidage et le virage sont serrés. Sur une neige très dure, les prises de carre sont très importantes, car elles permettent de tourner malgré la nature très glissante du sol.

En l'absence de séparations entre deux parties du socle, le patin porteur auquel est relié ledit socle rigide a plus de mal à s'arquer, et seules les deux extrémités forment un arc de cercle en contact avec la neige. Une partie seulement de la longueur de carre est donc au contact de la neige, d'où une prise beaucoup moins ferme, et un risque de chute ou d'absence de maîtrise dans les virages.

Dans l'hypothèse de l'invention, le socle étant souple en son milieu, il permet également au patin porteur d'être souple en son milieu et donc de décrire un arc de cercle permettant de mordre sur la neige quel que soit le type de virages que l'on veut réaliser, et pour tout type de neige. La liaison entre la partie avant du patin porteur et le socle étant souple également, la courbure du patin est assurée également à cette extrémité.

On effectue par conséquent moins de dérapages, et les trajectoires peuvent être plus serrées et plus précises.

L'invention va à présent être décrite en référence aux dessins en annexe, pour lesquels :
- la figure 1 est une vue en perspective d'un engin de glisse selon l'invention, et
- la figure 2 en est une vue latérale.

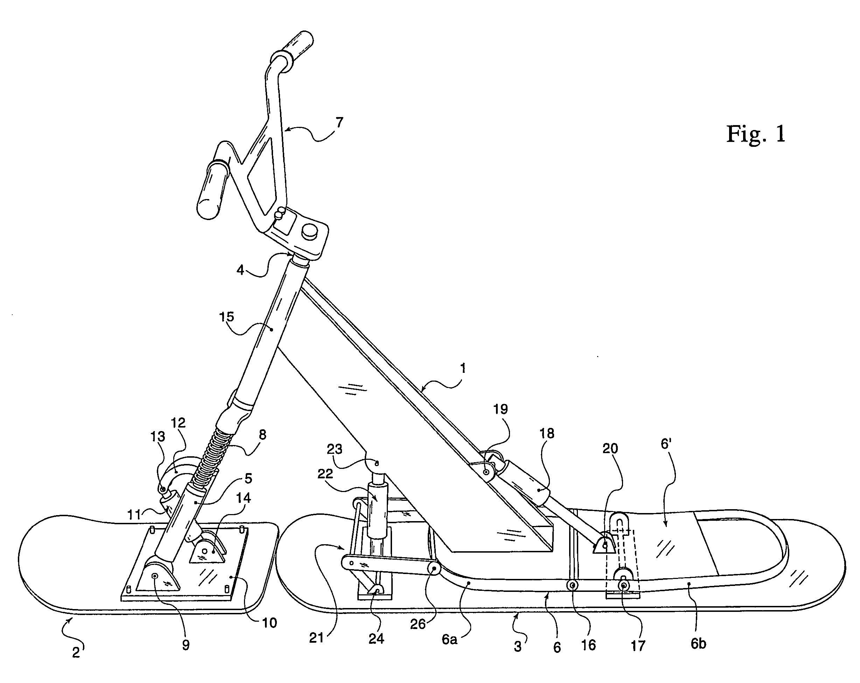

En référence à la figure 1, l'engin de glisse selon l'invention comporte un cadre rigide (1) auquel sont reliés un patin directionnel (2) et un patin porteur (3), via respectivement une colonne de direction (4) équipée d'une fourche inférieure (5) et un socle (6) prévu, pour supporter les pieds de l'utilisateur, partiellement surmonté à cet effet d'une plaque antidérapante (6'). La colonne de direction (4) est surmontée d'un guidon (7) classique, permettant le maniement de l'engin. La fourche inférieure (5) est équipée d'amortisseurs axiaux (8), et elle est reliée au patin (2) via des articulations (9). La partie de l'articulation (9) qui est solidarisée au patin directeur (2) l'est par l'intermédiaire d'une plaque (10) par exemple vissée audit patin (2).

Un dispositif d'amortissement (11) est implanté entre les branches de la fourche (5). Ce dispositif est d'une part fixé à une console (12) dépassant d'une traverse reliant les deux bras de la fourche (5), sous les suspensions (8), et qui permet de décaler la fixation supérieure articulée (13) du dispositif d'amortissement (11), pour faciliter son changement d'orientation. A son autre extrémité, ledit dispositif est fixé, également via une articulation (14), à la plaque (10).

L'ensemble des liaisons à articulations auquel il a été fait référence jusqu'ici, ainsi que celles qui seront mentionnées dans la suite, fonctionnent toutes suivant des axes transversaux, parallèles entre eux.

Le système d'amortissement (11) peut par exemple être du type oléopneumatique, et sa dureté est alors réglable par gonflage.

Son action sur la portion arrière du patin directionnel (2) permet de maintenir, selon réglage, le plan du patin (2) incliné avec sa pointe avant relevée vers le haut lorsqu'aucune force n'y est exercée.

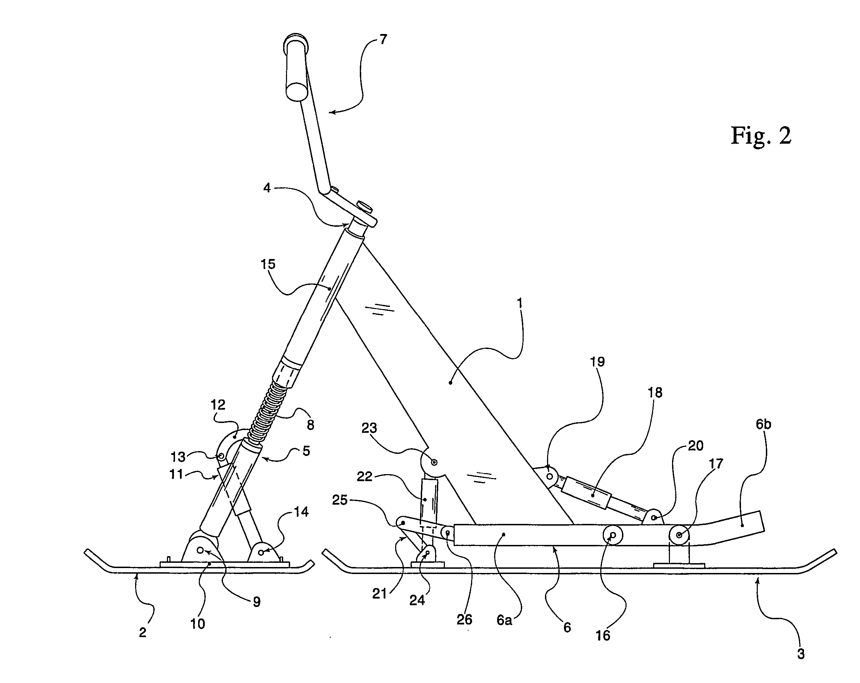

La liaison entre la colonne de direction (4) et le cadre rigide (1) se fait via un manchon (15) d'une seule pièce avec ledit cadre (1). Ce dernier est solidarisé, en sa partie inférieure, au socle (6). En réalité, il est solidarisé à une partie avant (6a) dudit socle, laquelle est articulée à une partie (6b) arrière au moyen d'une articulation transversale (16). Ledit socle peut être considéré comme partie intégrante du cadre rigide (1), d'une partie qui aurait été séparée en deux portions distinctes (6a et 6b) qui participent de l'originalité du système de l'invention. Comme cela apparaît mieux en figure 2, le socle (6) est disposé sensiblement parallèlement au patin porteur (3), à une certaine distance de celui-ci. Cette distance est notamment fixée par une articulation transversale (17) autour de laquelle pivote la partie arrière (6b) du socle (6). Outre l'articulation transversale (16), ladite partie (6b) est reliée au cadre rigide (1) via un dispositif amortisseur (18) dont les extrémités sont montées à pivotement, en (19 et 20), respectivement au dit cadre (1) et à la partie arrière (6b) du socle. Ce système d'amortissement, qui peut également être du type oléopneumatique, a une dureté qui est réglable. II doit notamment être adapté au poids de l'utilisateur, afin que celui-ci, lorsque l'un ou ses deux pieds reposent sur le socle (6), ne puisse le déplacer trop facilement.

L'extrémité avant du socle (6), c'est-à-dire l'extrémité de la partie avant (6a), est reliée au patin porteur (3) via un mécanisme à double genouillère parallèle (21), qui entoure un dispositif amortisseur (22) qui peut être du même type que les précédents. Ce dernier est monté à pivotement en (23) au cadre (1), et à son autre extrémité au patin porteur (3). Cette dernière articulation n'apparaît pas sur les figures.

La figure 2 laisse clairement apparaître l'agencement relatif des différentes parties de l'engin de glisse de l'invention. En particulier, la liaison à genouillère comporte classiquement trois axes d'articulation (24, 25 et 26). La configuration suspendue du socle (6), lequel est au surplus séparé en deux parties dont l'une est directement tributaire du cadre rigide (1), alors que l'autre n'en subit ses effets que via l'articulation (16) et/ou le dispositif amortisseur (18), permet une bonne transmission de l'information arrivant d'une part du patin directeur (2) à destination du patin porteur (3), et également des sollicitations en provenance du guidon (7) - *a priori* destiné uniquement au patin directeur (2) - vers le patin porteur (3). A l'inverse, cette structure mécanique permet un retour d'information, par exemple du patin porteur (3) vers le guidon (7) et le patin directeur (2), ou des pieds de l'utilisateur, en appui sur le socle (6), à destination du guidon (7) ou du patin directeur (2).

Globalement, cette configuration améliore très nettement la maniabilité et le confort de conduite d'engins de glisse de ce type.

## Revendications

1. Engin de glisse sur neige comportant un patin arrière porteur (3) et un patin avant directionnel (2) auquel est reliée une colonne de direction (4) pivotant dans un manchon (15) solidarisé à l'extrémité supérieure d'un cadre rigide (1) reliant lesdits patins, et dont l'extrémité inférieure est fixée à un socle (6) support surmontant le patin porteur (3) et prévu pour supporter les pieds de l'utilisateur, **caractérisé en ce que** la partie avant dudit socle (6) est reliée au patin porteur (3) par une liaison mécanique (21) à débattement d'allure perpendiculaire audit patin (3) contrôlé par un dispositif amortisseur (22).

2. Engin de glisse selon la revendication précédente, **caractérisé en ce que** ledit socle (6) est articulé au patin porteur (3) en un emplacement situé dans la moitié arrière du socle (6), ladite articulation (16) étant orientée transversalement au patin.

3. Engin de glisse selon l'une des revendications précédentes, **caractérisé en ce que** le socle comporte une articulation transversale (16) localisée sensiblement en son milieu, divisant ledit socle (6) en une partie avant et une partie arrière articulées l'une à l'autre.

4. Engin de glisse selon la revendication précédente, **caractérisé en ce que** le cadre rigide (1) est fixé à la partie avant du socle (6).

5. Engin de glisse selon l'une des revendications précédentes, **caractérisé en ce que** l'extrémité avant du socle (6) est articulée au patin porteur au moyen d'une genouillère (21) dont les axes de rotation sont transversaux.

6. Engin de glisse selon la revendication précédente, **caractérisé en ce que** le dispositif amortisseur (22) est disposé entre le cadre rigide (1) et le patin porteur (3), au voisinage de la genouillère (21), ledit dispositif amortisseur (22) étant articulé à ses deux extrémités selon un axe de pivotement parallèle aux axes de la genouillère (21).

7. Engin de glisse selon la revendication précédente, **caractérisé en ce que** ladite genouillère (21) comporte un double jeu de biellettes parallèles, le dispositif amortisseur (22) étant disposé entre lesdits jeux.

8. Engin de glisse selon l'une quelconque des revendications 3 à 7, **caractérisé en ce que** l'articulation reliant la partie arrière du socle (6) et le patin porteur est localisée à proximité de l'articulation reliant les parties avant et arrière dudit socle (6).

9. Engin de glisse selon l'une quelconque des revendications 3 à 8, **caractérisé en ce qu'**un dispositif amortisseur (18) est placé entre le cadre rigide (1) et la partie arrière du socle (6), ledit dispositif (18) étant articulé à ses deux extrémités selon un axe de pivotement transversal.

10. Engin de glisse selon l'une quelconque des revendications précédentes, **caractérisé en ce que** la colonne de direction (4) est fixée au patin avant directionnel (2) par l'intermédiaire d'une fourche (5) dont chaque branche comporte une suspension (8) déformable élastiquement dans la direction de l'axe de la colonne (4).

11. Engin de glisse selon l'une quelconque des revendications précédentes, **caractérisé en ce que** la colonne de direction (4) est reliée au patin directeur (2) par l'intermédiaire d'un dispositif amortisseur (11) doublement articulé à ladite colonne (4) et au patin (2) selon un axe de pivotement transversal, dont l'orientation et le point d'application à l'arrière du patin (2) permettent au dispositif amortisseur (11) d'exercer un effort de poussée sur l'arrière aboutissant à incliner le plan dudit patin (2) de manière à déplacer sa pointe avant vers le haut.

12. Engin de glisse selon la revendication précédente, **caractérisé en ce que** ledit dispositif amortisseur (11) est fixé à un emplacement de la colonne de direction (4) qui est fixe axialement.

## Claims

1. A vehicle for sliding over snow including a bearing rear runner and a directional front runner to which is connected a steering column pivoting in a sleeve firmly attached to the upper end of a stiff frame connecting both runners, and the lower end of which is attached to a supporting base surmounting the bearing runner and provided for supporting the feet of the user, **characterized in that** the front portion of said base is connected to the bearing runner by a mechanical connection allowing travels substantially perpendicular to said runner controlled by a damping device.

2. The sliding vehicle according to the preceding claim, **characterized in that** said base is jointed with the bearing runner in a location located in the rear half of the base, said joint being orientated transversely to the runner.

3. The sliding vehicle according to any of the preceding claims, **characterized in that** the base includes a transverse joint substantially localized in its middle, dividing said base into a front portion and a rear portion jointed with each other.

4. The sliding vehicle according to the preceding claim, **characterized in that** the stiff frame is attached to the front portion of the base.

5. The sliding vehicle according to any of the preceding claims, **characterized in that** the front end of the base is jointed with the bearing runner by means of a knuckle joint, the axes of rotation of which are transverse.

6. The sliding vehicle according to the preceding claim, **characterized in that** the damping device is positioned between the stiff frame and the bearing runner, in the vicinity of the knuckle joint, said damping device being jointed at both of its ends along a pivot axis parallel to the axes of the knuckle joint.

7. The sliding vehicle according to the preceding claim, **characterized in that** said knuckle joint includes a dual set of parallel connecting rods, the damping device being positioned between said sets.

8. The sliding vehicle according to any of claims 3 to 7, **characterized in that** the joint connecting the rear portion of the base and the bearing runner is localized in proximity to the joint connecting the front and rear portions of said base.

9. The sliding vehicle according to any of claims 3 to 8, **characterized in that** a damping device is placed between the stiff frame and the rear portion of the base, said device being jointed at its two ends along a transverse pivot axis.

10. The sliding vehicle according to any of the preceding claims, **characterized in that** the steering column is attached to the directional front runner through a fork, each branch of which includes an elastically deformable suspension in the direction of the axis of the column.

11. The sliding vehicle according to any of the preceding claims, **characterized in that** the steering column is connected to the directing runner through a damping device dually jointed with said column and with the runner along a transverse pivot axis, the orientation and application point of which at the rear of the runner allow the damping device to exert an urging force on the rear resulting in the tilting of the plane of said runner so as to displace its front tip upwards.

12. The sliding vehicle according to the preceding claim, **characterized in that** said damping device is attached to a location of the steering column which is attached axially.

## Patentansprüche

1. Vorrichtung zum Gleiten auf Schnee, welche eine hintere Trägerkufe (3) und eine vordere Lenkkufe (2) aufweist, mit der eine Lenksäule (4) verbunden ist, die in einer Muffe (15) schwenkt, die mit dem oberen Ende eines starren Rahmens (1) fest verbunden ist, der die Kufen verbindet, und dessen unteres Ende an einem Trägersockel (6) befestigt ist, der die Trägerkufe (3) überragt und vorgesehen ist, um die Füße des Benutzers zu tragen, **dadurch gekennzeichnet, dass** der vordere Teil des Sockels (6) mit der Trägerkufe (3) durch eine mechanische Federungsbindung (21) verbunden ist, mit einem zur Kufe (3) rechtwinkligen Verlauf, die durch eine Dämpfungsvorrichtung (22) gesteuert wird.

2. Gleitvorrichtung gemäß dem vorausgegangenen Anspruch, **dadurch gekennzeichnet, dass** der Sockel (6) mit der Trägerkufe (3) an einer Stelle gelenkig verbunden ist, die auf der hinteren Mitte des Sockels (6) angeordnet ist, wobei das Gelenk (16) transversal zur Kufe ausgerichtet ist.

3. Gleitvorrichtung gemäß einem der vorausgegangenen Ansprüche, **dadurch gekennzeichnet, dass** der Sockel ein transversales Gelenk (16) aufweist, das im Wesentlichen in seiner Mitte angeordnet ist, wodurch der Sockel (6) in einen vorderen Teil und einen hinteren Teil geteilt wird, die miteinander gelenkig verbunden sind.

4. Gleitvorrichtung gemäß dem vorausgegangenen Anspruch, **dadurch gekennzeichnet, dass** der starre Rahmen (1) am vorderen Teil des Sockels (6) befestigt ist.

5. Gleitvorrichtung gemäß einem der vorausgegangenen Ansprüche, **dadurch gekennzeichnet, dass** das vordere Ende des Sockels (6) gelenkig mit der Trägerkufe (3) mittels eines Kniegelenks (21), dessen Rotationsachsen transversal sind, gelenkig verbunden ist.

6. Gleitvorrichtung gemäß dem vorausgegangenen Anspruch, **dadurch gekennzeichnet, dass** die Dämpfungsvorrichtung (22) zwischen dem starren Rahmen (1) und der Trägerkufe (3) in der Nähe des Kniegelenks (21) angeordnet ist, wobei die Dämpfungsvorrichtung (22) an beiden Enden gelenkig verbunden ist entlang einer Schwenkachse, die parallel zu den Achsen des Kniegelenks (21) ist.

7. Gleitvorrichtung gemäß dem vorausgegangenen Anspruch, **dadurch gekennzeichnet, dass** das Kniegelenk (21) einen doppelten Satz paralleler Stangen aufweist, wobei die Dämpfungsvorrichtung (22) zwischen den Sätzen angeordnet ist.

8. Gleitvorrichtung gemäß einem der Ansprüche 3 bis 7, **dadurch gekennzeichnet, dass** das Gelenk, das den vorderen Teil des Sockels (6) und die Trägerkufe (83) verbindet, in der Nähe des Gelenks angeordnet ist, das den vorderen und hinteren Teil des Sockels (6) verbindet.

9. Gleitvorrichtung gemäß einem der Ansprüche 3 bis 8, **dadurch gekennzeichnet, dass** eine Dämpfungsvorrichtung (18) zwischen dem starren Rahmen (1) und dem hinteren Teil des Sockels (6) angeordnet ist, wobei die Vorrichtung (18) an ihren beiden Enden entlang einer transversalen Schwenkachse gelenkig verbunden ist.

10. Gleitvorrichtung gemäß einem der vorausgegangenen Ansprüche, **dadurch gekennzeichnet, dass** die Lenksäule (4) an der vorderen Lenkkufe (2) mittels einer Gabel (5) befestigt ist, von der jeder Arm eine in Richtung der Achse der Säule (4) elastisch verformbare Aufhängung (8) aufweist.

11. Gleitvorrichtung gemäß einem der vorausgegangenen Ansprüche, **dadurch gekennzeichnet, dass** die Lenksäule (4) mit der Lenkkufe (2) mittels einer Dämpfungsvorrichtung (11) verbunden ist, die zweifach mit der Säule (4) und der Kufe (2) entlang einer transversalen Schwenkachse gelenkig verbunden ist, deren Ausrichtung und Ansetzpunkt auf der Hinterseite der Kufe (2) es einer Dämpfungsvorrichtung (11) ermöglichen, eine Schubkraft auf das Heck auszuüben, um die Ebene der Kufe (2) zu neigen, um deren vordere Spitze nach oben zu versetzen.

12. Gleitvorrichtung gemäß dem vorausgegangenen Anspruch, **dadurch gekennzeichnet, dass** die Dämpfungsvorrichtung (11) an einer Stelle der Lenksäule (4) befestigt ist, die axial befestigt ist.
